# EUROPEAN PATENT SPECIFICATION

(11) **EP 1 724 972 B1**
(45) Date of publication and mention of the grant of the patent: **30.07.2008**
(21) Application number: 06705567.3
(22) Date of filing: 25.01.2006
(51) Int. Cl.: H04L 12/56

(54) **A SERVICE REROUTING TRIGGERING METHOD**
DIENST-UMLEIT-TRIGGER-VERFAHREN
PROCEDE D'ENCLENCHEMENT D'UN REROUTAGE DE SERVICE

(30) Priority: 25.01.2005 CN 200510033025
(43) Date of publication of application: 22.11.2006
(73) Proprietor: Huawei Technologies Co., Ltd., Longang District Shenzhen 518129 (CN)
(72) Inventor: SUN, Junbai, Huawei Administration Bld., Guangdong 518129 (CN); WANG, Yu, Huawei Administration Bld., Guangdong 518129 (CN); FENG, Junjie, Huawei Administration Bld., Guangdong 518129 (CN)
(74) Representative: Skuhra, Udo
(86) International application number: PCT/CN2006/000146
(87) International publication number: WO 2006/079286

(56) References cited:
- EP-A- 1 217 789
- EP-A- 1 422 968
- CN-A- 1 424 827
- CN-A- 1 472 890
- JP-A- 2002 118 580
- US-A- 5 442 620
- US-A1- 2001 019 540
- US-A1- 2002 163 686

## Description

### Field of the Technology

The present invention relates to techniques for triggering service re-routing, and more particularly, to a method for triggering service re-routing in an Automatically Switched Optical Network (ASON).

### Background of the Invention

A traditional optical network, such as the Synchronous Digital Hierarchy (SDH), the Synchronous Optical Network (SONET) and the Wavelength Division Multiplex (WDM), is a system based on centralized administration, in which nodes of the optical network are typically "mute", namely, the establishment, maintenance and removal of an optical connection always need human intervention. The optical connection built in such a manner is called a permanent connection. The optical network based on the permanent connection can not meet the increasing demand for network bandwidth from increasing IP data service, nor can it meet the need of dynamic and flexible allocation of network bandwidth brought by the uncertainty and unpredictability of the traffic of IP data service.

The Automatically Switched Optical Network (ASON) is an optical network which is based on a distributed control plane and supports dynamic switching connection defined by the International Telecommunications Union (ITU). The ASON implements automatic connection management through various transport networks taking the advantage of the separate control plane. The ASON supports the dynamic allocation and cross connection of network bandwidth, and can optimize the network effectively based on the information of the client layer, such as the change of the volume of IP data service. Compared with the traditional optical network, when dealing with the same demand of network service, the ASON can reduce the networking cost greatly, enhance the efficiency of utility ratio of bandwidth, and implement a distributed recovery of the network, which increases the reliability of the network significantly.

The core function of the control plane of the ASON is the intelligent operation for the transport plane. The optical connection in the ASON can be classified into three categories, i.e., crossed connection, switching connection and soft-permanent connection. In the ASON architecture, an optical network element first gets the connection relationship between itself and other optical network elements through the finding technique of local links, and then, via the control plane, releases its own node and link state while receiving the node and link states released by other optical network elements. Eventually, each optical network element has a copy of the "network map" which precisely describes the network topology and includes the information of nodes, links and resources. When receiving the request for setting up a connection from a client device or an administration system, the optical network gets a feasible path by a certain routing algorithm using the information of the "network map", then drives the nodes on the path to set up crossed connection through a signaling protocol till the destination node completes the dynamic setup of the optical connection. When the optical connection is set up or removed, or when the link resources are changed due to failures, the related optical network elements need to release renewed state information of nodes and links to achieve the re-synchronization of the "network map". If an optical connection, such as a crossed connection, a switching connection or a soft-permanent connection, is interrupted when a network failure, such as a link interruption or a node disabling, occurs, the control plane is capable of dynamically performing the routing algorithm again to set up a new optical connection and restore the service. Such a process is called re-routing.

A service may be interrupted during the transmission in the optical network due to a failure of the service paths. To solve this problem, various mature techniques for protecting the service, such as a 1:N linear multiplex segment protection, a two-fiber Multiplex Section(MS) shared protection ring and a four-fiber MS shared protection ring, are proposed in the traditional optical network.

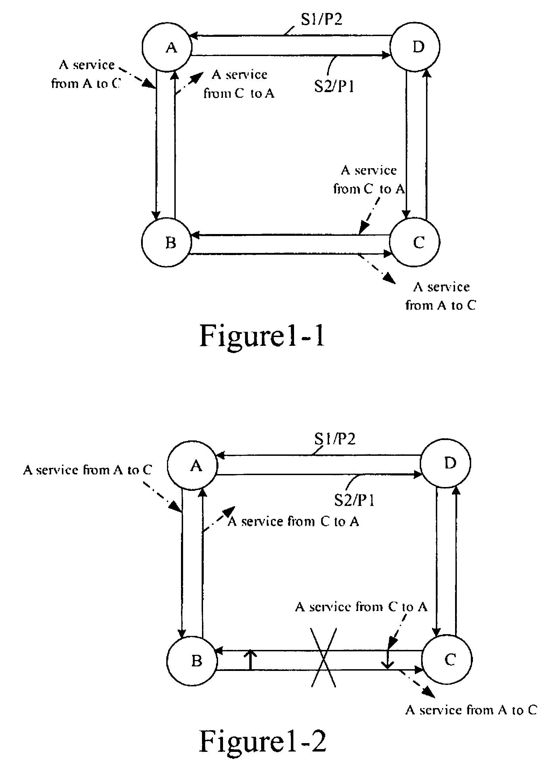

Figure 1-1 is a schematic diagram illustrating the two-fiber MS shared protection ring. As shown in Figure 1-1, nodes A, B, C and D constitute an optical network ring and there is a pair of optical fibers of opposite direction S1/P2, S2/P1 between each two nodes. This optical network ring is called the two-fiber MS shared protection ring, wherein the time slots of each optical fiber are divided into work time slots and protection time slots. A service signal is transported in the work time slots of the optical fiber when the optical fiber is normal. When a failure of the optical fiber occurs, the service signal is transferred to the protection time slots of another optical fiber in the opposite direction . For example, when a failure of the optical fiber S1/P2 occurs, the service signal transported in the work time slots of the optical fiber S1/P2 can be transferred to the protection time slot of the optical fiber S2/P1 for transportation. Likewise, when a failure of the optical fiber S2/P1 occurs, the service signal transported in the work time slots of the optical fiber S2/P1 can be transferred to the protection time slots of the optical fiber S1/P2. The multiplex section protection method, in which the service signal transported in the work time slots of an optical fiber is transferred to the protection time slots of another optical fiber in the opposite direction for transportation due to a failure of the former optical fiber, is called a ring switching Figure 1-2 is a schematic diagram illustrating the ring switching in the two-fiber MS shared protection ring. As shown in Figure 1-2, when both of the optical fibers are broken due to the occurrence of a failure of the optical cable between nodes B and C, a ring switching will occur in nodes B and C which are adjacent to the cutting point. That is, the service signal transported in the work time slots of the optical fiber S1/P2 is transferred to the protection time slot of the optical fiber S2/P1 at nodes B and C for transportation, and the service signal transported in the work time slots of the optical fiber S2/P1 is transferred to the protection time slot of the optical fiber S1/P2 at nodes B and C at the same time. As seen from the figure, the path of the service signal from node A to node C is A-B-C before the ring switching occurs, and changes to A-B-A-D-C after the ring switching occurs; the path of the service signal from node C to node A is C-B-A before the ring switching occurs, and changes to C-D-A-B-A after the ring switching occurs.

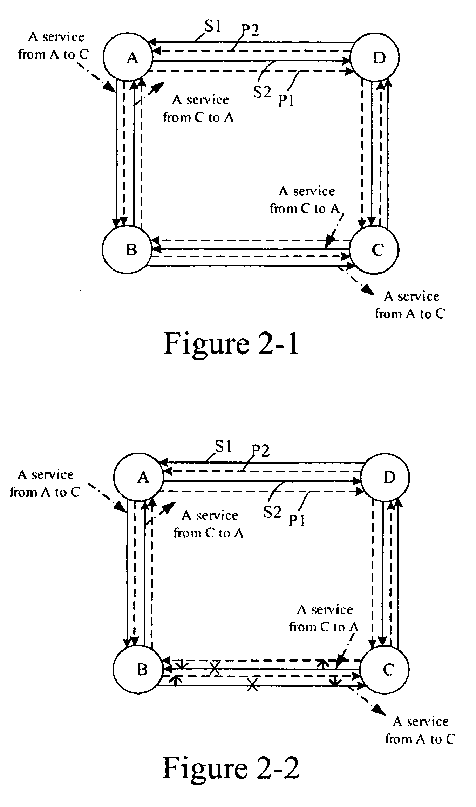

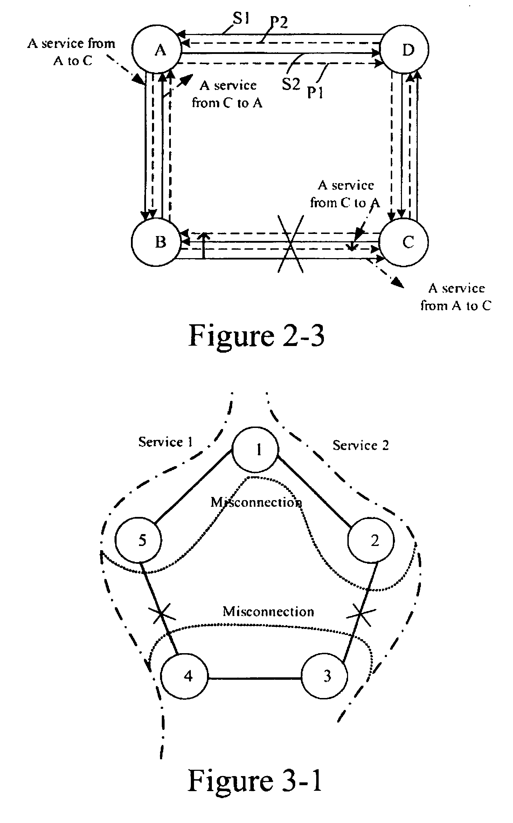

Figure 2-1 is a schematic diagram illustrating a four-fiber MS shared protection ring. As shown in Figure 2-1, nodes A, B, C and D constitute an optical network ring, and there are a pair of sending/receiving work optical fibers S1, S2, and a pair of sending/receiving protection optical fibers P1, P2 between each two nodes. The work optical fiber S 1 and the protection optical fiber P2 constitute an anticlockwise signal ring, and the work optical fiber S2 and the protection optical fiber P1 constitute a clockwise signal ring. For the instance of nodes A and C, the service signal from A to C is transported in the optical fiber S 1 and the service signal from C to A is transported in the optical fiber S2 in normal conditions while the protection optical fibers P1 and P2 are idle. When there is a broken fiber, the four-fiber MS shared protection ring will perform a span switching or ring switching depending on different conditions of the broken fiber. Specifically speaking, a span switching is performed when only the work optical fiber S 1 and/or S2 is broken, that is, the service signal transported in the work optical fiber is switched to the protection optical fiber of the same direction. As shown in Figure 2-2, when the work optical fiber S 1 is broken between node B and node C, the service signal transported in the work optical fiber S1 is switched to the protection optical fiber P2. When a node is disabled, or all the optical cables between two nodes are broken, that is, both the work optical fiber and the protection optical fiber are broken, perform a ring switching. As shown in Figure 2-3, when the optical cables between node B and node C are broken, the service signal in the work optical fiber S1 is switched to the protection optical fiber P1 and the service signal in the work optical fiber S2 is switched to the protection P2 at nodes B and C.

As can be seen from the above, there is only the ring switching protection but no span switching protection in the two-fiber MS shared protection ring, while in the four-fiber MS shared protection ring, there are both span switching protection and ring switching protection, and span switching is preferred when both ring switching and span switching are available at the same time.

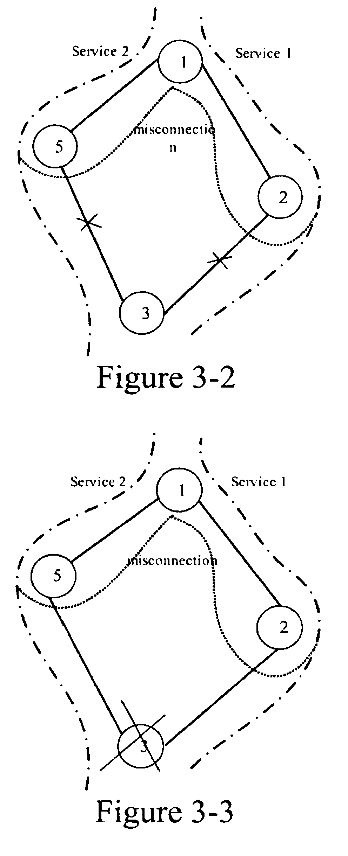

Each protection time slot is shared by different segments in the ring when the multiplex section protection is implemented by ring switching. Therefore, if a node or a number of nodes are isolated from the ring as a result of multiple disabled nodes or multiple broken optical cables in the ring, the service signals transported in different segments may occupy the same protection time slot, which will lead to service misconnection. Figures 3-1, 3-2 and 3-3 are schematic diagrams illustrating service misconnection due to multiple failures, respectively. As shown in Figure 3-1, when the optical cables between nodes 4 and 5 are broken in a multiplex section of five nodes, a ring switching is performed. Service I transported between nodes I and 4 is protected by the ring switching, that is, service 1 is transferred to the opposite link for transportation as shown by the dashed line in the figure. Under these circumstances, if the optical cables between nodes 2 and 3 are broken as well, there has to be a ring switching of service 2 between nodes 1 and 3, that is, service 2 is transferred to the opposite link for transportation as shown by the dashed line in the figure. As can be seen from the figure, there is, at this time, service misconnection of service I and service 2 at nodes 1 and 4. Likewise, as shown in Figure 3-2, there is a service misconnection of service 1 and service 2 at node 1 because there are broken cables on both sides of node 3, respectively, in a multiplex section of four nodes. As shown in Figure 3-3, if a failure occurs in node 3, which renders the cables on both sides of node 3 useless in a multiplex section of four nodes, there have to be ring switchings in nodes 2 and 5, which will lead to service misconnection of service 1 and service 2 at node 1.

If a link failure occurs when the service is protected by the ring switching, resulting in a service interruption or a service misconnection, service re-routing has to be triggered. At present, there are mainly two methods for triggering service re-routing.

One method is to trigger a service re-routing through a higher order path alarm. The disadvantage of this method is that the triggering precision is low. For example, the alarm may be not given when there is interruption, misconnection or a broken fiber in a cross-ring service. Furthermore, the complexity of implementing this method is high, especially in the four-fiber MS shared protection ring where both ring switching and span switching exist.

The other method is mainly to trigger a service re-routing through detecting service misconnection, i.e. detecting service misconnection by making use of overhead bytes and relevant alarms. For example, service misconnection can be detected by using a higher order path trace byte, i.e., the mismatch alarm of the J1 byte and the High Path Identifier Trace mismatch (HP-TIM). More specifically, different identifiers can be used in the J 1 byte of each VC-4 (Virtual Concatenation) service, and the identifier in the J1 byte will change when service misconnection occurs. At this time, an HP-TIM alarm is generated, which can trigger service re-routing. The disadvantage of this method is that there is no generality in application. This is because the J 1 byte in some network is not allowed to be changed. For example, the J1 byte in a backbone network is mainly used in the service of the convergent layer or access layer network and is not allowed to be changed in the backbone network. As a result, this method is not feasible in a backbone network.

US 2002/0163686 A1 discloses an optical communication network, an optical information transmission method and network node devices for use in an optical communication network, in which optical signals are exchanged via a first data link between a first network node and a second network node with interposition of a number of further interconnected network node devices, in which, after a disturbance on the first data link, a third network node device sends a signaling signal to a fourth network node device connected to the third network node device for setting up a second data link which acts at least partial as a standby for the first data link, which signaling signal contains a parameter determined by the third network node device on the basis of which it is determined whether the fourth network node device is responsible for setting up the second data link or not.

### Summary of the Invention

The present invention is to provide a method for triggering service re-routing so as to improve the precision in triggering service re-routing and extend the application range of triggering service re-routing.

The method of the present invention is implemented as follows.

A method for triggering service re-routing, including
each node in an Automatically Switched Optical Network, further referred as ASON, getting information of a network topology, saving the information of the network topology and updating the information of the network topology in real time;
a node in the ASON determining whether the network topology is changed according to the saved information of network topology,
**characterized in that** the method further includes:
   if the node in the ASON determines that a changes occurs and the change occurs in a two-fiber Multiplex Section share protection ring, further referred as two-fiber MS share protection ring, the node in the ASON further determining whether an ingress node which is the first node a service entering the two-fiber MS shared protection ring, further referred as ingress node, and an egress node which is the last node traversed by the service before the service leaving the two-fiber MS shared protection ring, further referred as egress node, are located in different connection components,
   if the ingress node and the egress node are located in different connection components, determining an interruption or a misconnection occurs in the service and triggering a re-routing for the service;
   if the ingress node and the egress node are located in the same connection component, determining no interruption or misconnection occurs in the service and returning to the process of each node in the ASON getting the information of the network topology, saving the information of the network topology and updating the information of the network topology in real time.

Determining whether the network topology is changed, determining whether an interruption or a misconnection occurs in the service and triggering a re-routing for the service are performed by a source node of the service.

Determining whether the network topology is changed and determining whether an interruption or a misconnection occurs in the service are performed by a destination node of the service:
when the destination node of the service determines that an interruption or a misconnection occurs in the service, the method further includes:
   the destination node of the service informing a source node of the service that an interruption or a misconnection occurs in the service, and
   the source node of the service triggering the re-routing for the service.

Determining whether the network topology is changed and determining whether an interruption or a misconnection occurs in the service are performed by the ingress node of the service;
when the ingress node of the service determines an interruption or a misconnection occurs in the service, the method further includes:
the ingress node of the service informing a source node of the service that an interruption or a misconnection occurs in the service: and
the source node of the service triggering the re-routing for the service.

Determining whether the network topology is changed and determining whether an interruption or a misconnection occurs in the service are performed by the egress node of the service:
when the egress node of the service determines an interruption or a misconnection occurs in the service, the method further includes:
   the egress node of the service informing a source node of the service that an interruption or a misconnection occurs in the service; and
   the source node of the service triggering the re-routing for the service.

Each node in the ASON setting information of a network topology is achieved by performing a flooding to Traffic Engineering, further referred as TE, links through a route protocol.

The information of the network topology includes information of a multiplex section.

A method for triggering service re-routing, including
each node in an Automatically Switched Optical Network, further referred as ASON, getting information of a network topology, saving the information of the network topology and updating the information of the network topology in real time;
a node in the ASON determining whether the network topology is changed according to the saved information of network topology:
**characterized in that** the method further includes:
   if the node in the ASON determines that a change occurs and the change occurs in a four-fiber Multiplex Section shared protection ring, further referred as four-fiber MS share protection ring;
   the node in the ASON further determining whether the change of network topology arises from a failure on a protection path of a ring switching for the service,
   if the change of network topology arises from a failure on a protection path of a ring switching for the service, determining an interruption or a misconnection occurs in the service and triggering a re-routing for the service;
   if the change of network topology doesn't arise from a failure on a protection path of a ring switching for the service, determining no interruption or misconnection occurs in the service and returning to the process of each node in the ASON setting the information of the network topology, saving the information of the network topology and updating the information of the network topology in real time .

A failure on a protection path of a ring switching includes a failure occurring in a node of the protection path of the ring switching, or a failure occurring in a work optical fiber and/or a protection optical fiber between nodes of the protection path of the ring switching.

Determining whether the network topology is changed, determining whether an interruption or a misconnection occurs in the and triggering a re-routing for the service are performed by a source node of the service.

Determining whether the network topology is changed and determining whether an interruption or a misconnection occurs in the service are performed by a destination node of the service,
when the destination node of the service determines an interruption or a misconnection occurs in the service, the method further includes:
the destination node of the service informing a source node of the service that an interruption or a misconnection occurs in the-service, and
the source node of the service triggering the re-routing for the service.

Determining whether the network topology is changed and determining whether an interruption or a misconnection occurs in the service are performed bv an ingress node which is the first node the service entering the four-fiber MS share protection ring, further referred as ingress node;
when the ingress node determines an interruption or a misconnection occurs in the service, the method further includes:
the ingress node of the service informing a source node of current service that an interruption or a misconnection occurs in the service: and
the source node of the service triggering the re-routing for the service.

Determining whether the network topology is changed and determining whether an interruption or a misconnection occurs in the service are performed by an egress node which is the last node traversed by the service before the service leaving the four-fiber MS share protection ring, further referred as egress node;
when the egress node of the service determines an interruption or a misconnection occurs in the service, the method further includes:
the egress node of the service informing a source node of the service that an interruption or a misconnection occurs in the service: and
the source node of the service triggering the re-routing for the service.

Each node in the ASON setting information of a network topology is achieved by performing a flooding to Traffic Engineering, further referred as TE, links through a route protocol.

The information of network topology includes information of a multiplex section.

Compared with the prior art, the method provided by the present invention determines whether any one selecting from the group of an interruption or a misconnection occurs in a service according to the change in the topology information of the network saved in the nodes in the ASON. If the result of the judgment is YES, service re-routing is triggered. The method is easy to implement and the precision thereof is high. Furthermore, the method is not limited by the type of the network, which extends the application range of triggering service re-routing. Specifically speaking, if the ingress node and egress node of a service are detected to be located in different connection components in the two-fiber MS shared protection ring, service re-routing will be triggered; if a failure of the ring switching protection path of the service is detected in the four-fiber MS shared protection ring , service re-routing will be triggered.

### Brief Description of the Drawings

Figure 1-1 is a schematic diagram illustrating a two-fiber MS shared protection ring;
Figure 1-2 is a schematic diagram illustrating a ring switching in a two-fiber MS shared protection ring;
Figure 2-1 is a schematic diagram illustrating a four-fiber MS shared protection ring;
Figure 2-2 is a schematic diagram illustrating a span switching in a four-fiber MS shared protection ring;
Figure 2-3 is a schematic diagram illustrating the ring switching in a four-fiber MS shared protection ring;
Figure 3-1 is a schematic diagram illustrating the first example of service misconnection in a multiplex section;
Figure 3-2 is a schematic diagram illustrating the second example of service misconnection in a multiplex section;
Figure 3-3 is a schematic diagram illustrating the third example of service misconnection in a multiplex section;

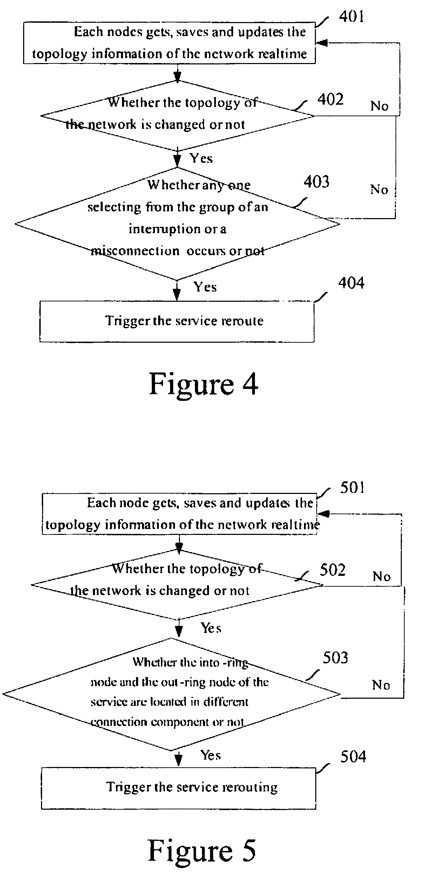

Figure 4 is a flow chart of triggering service re-routing in accordance with an embodiment of the present invention;
Figure 5 is a flow chart of triggering service re-routing in a two-fiber MS shared protection ring in accordance with an embodiment of the present invention;

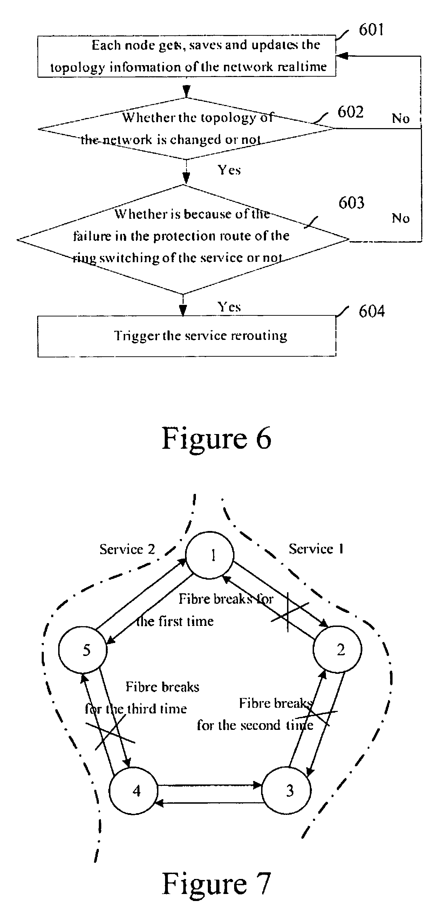

Figure 6 is a flow chart of triggering service re-routing in a four-fiber MS shared protection ring in accordance with an embodiment of the present invention;
Figure 7 is a schematic diagram illustrating an embodiment of triggering service re-routing in a two-fiber MS shared protection ring in accordance with an embodiment of the present invention;

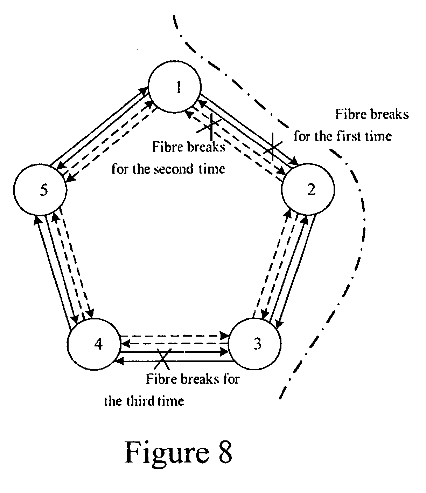

Figure 8 is a schematic diagram illustrating an embodiment of triggering service re-routing in a four-fiber MS shared protection ring in accordance with an embodiment of the present invention.

### Embodiments of the Invention

The present invention is hereinafter further described in detail with reference to the accompanying drawings and specific embodiments.

In an embodiment of the present invention, the service path means the path through which the service is transported in normal conditions; the protection path of a span switching means the path through which the service is transported in the protection optical fiber after a span switching occurs; the protection path of a ring switching means the path through which the service is transported after a ring switching occurs; the nodes passed by the protection path of the ring switching means the nodes by which the service passes after a ring switching occurs.

Figure 4 is a flow chart of triggering service re-routing in accordance with an embodiment of the present invention. As shown in Figure 4, the specific steps are as follows:

Step 401: Each node in the ASON gets the information of network topology, saves the information of network topology and updates the information of network topology in real time;

Each node in the ASON gets the topology information of the whole ASON through flooding the Traffic engineering (TE) links by the route protocol, and saves the topology information in the TE database. The information of network topology includes the information of the multiplex section, such as the ring including work optical fibers and the ring including protection optical fibers. Herein, the TE link is a logical link. The flooding means the process in which each network element gets the real-time topology information of the whole network by means of information interaction between each node using the route protocol. Each node saves a copy of "network map" about the topology of the whole ASON after the flooding. The "network map" includes the real-time TE information of the whole ASON, such as the information of the network elements, the information of the TE links, the attribute of the links including the information of the bandwidth, the information of the protection types, and the information of the time slots occupied. In addition, another important piece of information, i.e. the information of the multiplex section of the TE link, indicating which multiplex section the TE link belongs to, is included in the TE attribute of the "network map". The "network map" is also called the TE database.

Step 402: the nodes in the ASON determine whether the network topology is changed according to the saved information of network topology. If the result of the judgment is YES, proceed to Step 403. Otherwise, return to Step 401.

Herein, the network topology is changed when there is a failure, such as a broken fiber, in the multiplex section.

Step 403: the nodes in the ASON determine whether any one selecting from the group of an interruption or a misconnection occurs in the current service. If the result of the judgment is YES, proceed to Step 404. Otherwise, return to Step 401.

Step 404: the source node of the service in the ASON triggers re-routing of the service. Thereafter, the source node searches out a path again for the service and sets up the service on the new service path.

The node which determines whether the network topology is changed and whether any one selecting from the group of an interruption or a misconnection occurs in the current service can be the source node, the destination node, the ingress node or the egress node of the service. If the node which detects a service interruption or a service misconnection is not the source node, the source node needs to be informed. Then, the source node triggers a service re-routing. Herein, the source node and the destination node of the service are the boundary nodes where the service enters and leaves the current intelligent domain. The first node initiating the signaling process for the service setup is called the source node and the node that is last reached in the signaling process for the service setup is the destination node. The into-ring node is the node by which the service passes when first entering the multiplex section and the out-ring node is the last node by which the service passes before leaving the multiplex section. The information of network topology which a node saves is of the intelligent domain to which that node belongs.

Figure 5 is a flow chart of triggering a service re-routing in a two-fiber MS shared protection ring in accordance with an embodiment of the present invention. As shown in Figure 5, the specific steps are as follows.

Step 501: each node in the ASON gets the information of network topology, saves the information of network topology and updates the information of network topology in real time;

Step 502: the nodes in the ASON determine whether the network topology is changed according to the saved information of network topology. If the result of the judgment is YES, proceed to Step 503. Otherwise, proceed to Step 501.

Step 503: the nodes in the ASON detect that the change of network topology occurs in the two-fiber MS shared protection ring, then determine whether the into-ring node and the out-ring node of the current service are located in different connection components of the ring, respectively. If the result of the judgment is YES, determine that a service interruption or a service misconnection has occurred and proceed to Step 504. Otherwise, return to Step 501.

When a service is transported on a service path of one two-fiber MS shared protection ring, a ring switching will occur if a failure occurs in the optical fibers of the service path. Thereafter, service interruption or service misconnection will occur if another failure, such as a broken protection fiber, occurs on the protection path of the ring switching of the service. It can be seen that the first failure has occurred in the forward link between the into-ring node and the out-ring node of the service signal, and the second failure has occurred in the reversed link between the into-ring node and the out-ring node of the service signal. Therefore, the two failures have cut off the connection between the into-ring node and the out-ring node, which makes it impossible to put through the services transported in both the forward link and the reversed link of the two-fiber MS shared protection ring, that is, no connection can be set up between the into-ring node and the cut-ring node. At this time, it is determined the service interruption or service misconnection has occurred and a service re-routing needs to be triggered.

Step 504: the node in the ASON triggers the re-routing of the service. Thereafter, the node in the ASON searches out a path again for the service and sets up the service on a new service path.

Figure 6 is a flow chart of triggering a service re-routing in a four-fiber MS shared protection ring in accordance with an embodiment of the present invention. As shown in Figure 6, the specific steps are as follows.

Step 601: Each node in the ASON gets the information of network topology, saves the information of network topology and updates the information of network topology in real time;

Step 602: the nodes in the ASON determine whether the network topology is changed according to the saved information of network topology. If the result of the judgment is YES, proceed to Step 603. Otherwise, return to Step 601.

Step 603: the nodes in the ASON detect that it is in a 4-fiber bi-directional multiplex section that a change of network topology occurs, then determine whether the change of network topology arises from a failure which occurs on the protection path of the ring switching of the current service. If the result of the judgment is YES, determine whether any one selecting from the group of an interruption or a misconnection has occurred and proceed to Step 604. Otherwise, return to Step 601.

If a failure occurs in a node of the protection path of the ring switching, by which the current service passes, or either or both of the work optical fiber and the protection optical fiber between the nodes of the protection path passes have broken, service interruption or service misconnection will occur.

When there is a broken fiber on the service path of a service transported in one four-fiber MS shared protection ring, a span switching will occur. When there is a broken fiber as well on the protection path of the span switching, a ring switching will occur. Thereafter, if there is a broken fiber between the nodes that the protection path of the ring switching passes, service interruption or service misconnection will occur and the service re-routing needs to be triggered.

Step 604: the node in the ASON triggers the re-routing of the service. Thereafter, the node in the ASON searches out a path again for the service and sets up the service on a new service path.

Examples of triggering service re-routing in the two-fiber MS shared protection ring and the four-fiber MS shared protection ring in accordance with the present invention are hereinafter given, respectively.

### Example 1: triggering a service re-routing in the two-fiber MS shared protection ring.

As shown in Figure 7, nodes 1, 2, 3, 4 and 5 constitute the two-fiber MS shared protection ring, in which there are service 1 and service 2 passing. Service 1 passes nodes 1, 2, 3 successively, and the into-ring node and out-ring node are node 1 and node 3 respectively; service 2 passes nodes 1, 5, 4 successively, and the into-ring node and out-ring node are node 1 and node 4, respectively. Suppose that there are three events of broken fibers successively in the ring, each of which is as follows.

When there is a first event of broken fiber, the optical cable between node 1 and node 2 is disconnected, that is, the work optical fiber and the protection optical fiber are broken at the same time. In this case, service 1 is protected by the ring switching and the path is changed to 1-5-4-3-2-3 such that service 1 could be transferred continuously. The intelligent system of node 1 checks service 1 and finds that the into-ring node 1 and out-ring node 3 of service 1 can be connected through the path 1-5-4-3. Thus service re-routing is not needed, service 2 has not been affected and will follow the same path.

When there is a second event of broken fiber and the optical cable between node 2 and node 3 has been broken, that is, the work optical fiber and the protection optical fiber have been broken at the same time, service 1 will be protected by the ring-switching again, the path changes to 1-5-4-3, and service 1 continues. When the intelligent system of node I checks service 1, it is found that the into-ring node 1 and out-ring node 3 of service 1 are connected through the path 1-5-4-3. Thus no service re-routing is needed; service 2 is not affected and will follow the same path.

When there is a third event of broken fiber and the optical cable between the node 5 and node 4 has been broken, that is, the work optical fiber and the protection optical fiber are broken simultaneously, as the protection path of the ring switching by which service 1 passes is interrupted, service 1 is interrupted. When the intelligent system of node 1 checks service 1, it is found that the into-ring node 1 and out-ring node 3 have already been separated into two different connection components. Therefore, the intelligent system of node 1 will trigger a service re-routing for service 1. Meanwhile service 2 is protected the ring switching, which will lead to service misconnection. When the intelligent system of node 1 checks service 2, it is found that the into-ring node 1 and out-ring node 4 of service 2 have been separated as well into two different connection components. Thus, the intelligent system of node I will also trigger a service re-routing for service 2.

### Example 2: triggering service re-routing in the four-fiber MS shared protection ring.

As shown in Figure 8, nodes 1, 2, 3, 4 and 5 constitute one four-fiber MS shared protection ring, wherein service 1 passes nodes 1, 2, 3 successively, and the into-ring node and the out-ring node are node I and node 3, respectively. There are three events of broken fiber occurring successively in the ring, each of which is described as follows.

When there are broken fibers for the first time, the two work optical fibers between node 1 and node 2 are broken. Service 1 is protected by the span switching and the path is changed to 1-2-3. Then, service 1 passes the protection optical fiber between node 1 and node 2, that is, path 1-2, which is the protection path of the span switching. Service 1 continues.

When there are broken fibers for the second time, the two protection optical fibers between node 1 and node 2 are broken. Service 1 is then protected by the ring switching and the path is changed to 1-5-4-3-2-3, wherein path 1-5-4-3-2 is the protection path of the ring switching. Service 1 continued.

When there are broken fibers for the third time, the two work fibers between the node 3 and node 4 are broken, which results in a span switching of the service originally transported in the work fibers between node 3 and node 4, that is, the service is transferred to the protection fibers between node 3 and node 4 for transportation. Therefore, the protection path 4-3 between node 3 and node 4 of the ring switching of service 1 is occupied and service 1 is interrupted. At this time, the intelligent system of node 1 will detect that service I has been interrupted, and trigger a service re-routing for service 1.

## Claims

1. A method for triggering service re-routing, comprising:
each node in an Automatically Switched Optical Network, further referred as ASON, getting information of a network topology, saving the information of the network topology and updating the information of the network topology in real time (501);
a node in the ASON determining whether the network topology is changed according to the saved information of network topology (502),
**characterized in that** the method further comprises:
- if the node in the ASON determines that a change occurs and, the change occurs in a two-fiber Multiplex Section share protection ring further referred as two-fiber MS share protection ring, the node in the ASON further determining whether an ingress node which is the first node a service entering the two-fiber MS shared protection ring, further referred as ingress node, and an egress node which is the last node traversed by the service before the service leaving the two-fiber MS shared protection ring, further referred as egress node, are located in different connection components (503),
if the ingress node and the egress node are located in different connection components, determining an interruption or a misconnection occurs in the service and triggering a re-routing for the service (504);
if the ingress node and the egress node are located in the same connection component, determining no interruption or misconnection occurs in the service and returning to the process of each node in the ASON getting the information of the network topology, saving the information of the network topology and updating the information of the network topology in real time.

2. The method according to Claim 1, wherein determining whether the network topology is changed, determining whether an interruption or a misconnection occurs in the service and triggering a re-routing for the service are performed by a source node of the service.

3. The method according to Claim 1, wherein determining whether the network topology is changed and determining whether an interruption or a misconnection occurs in the service are performed by a destination node of the service;
when the destination node of the service determines that an interruption or a misconnection occurs in the service, the method further comprises:
the destination node of the service informing a source node of the service that an interruption or a misconnection occurs in the service; and
the source node of the service triggering the re-routing for the service.

4. The method according to Claim 1, wherein determining whether the network topology is changed and determining whether an interruption or a misconnection occurs in the service are performed by the ingress node of the service;
when the ingress node of the service determines an interruption or a misconnection occurs in the service, the method further comprises:
the ingress node of the service informing a source node of the service that an interruption or a misconnection occurs in the service; and
the source node of the service triggering the re-routing for the service.

5. The method according to Claim 1, wherein determining whether the network topology is changed and determining whether an interruption or a misconnection occurs in the service are performed by the egress node of the service;
when the egress node of the service determines an interruption or a misconnection occurs in the service, the method further comprises:
the egress node of the service informing a source node of the service that an interruption or a misconnection occurs in the service; and
the source node of the service triggering the re-routing for the service.

6. The method according to Claim 1, wherein each node in the ASON getting information of a network topology is achieved by performing a flooding to Traffic Engineering, further referred as TE, links through a route protocol.

7. The method according to Claim 1, wherein the information of the network topology comprises information of a multiplex section.

8. A method for triggering service re-routing, comprising:
each node in an Automatically Switched Optical Network, further referred as ASON, getting information of a network topology, saving the information of the network topology and updating the information of the network topology in real time (601);
a node in the ASON determining whether the network topology is changed according to the saved information of network topology (602);
**characterized in that** the method further comprises:
the nodes in the ASON determines that a change occurs and the change in a four-fiber Multiplex Section shared protection ring, (four- fiber MS share protection ring;)
the nodes in the ASON further determining whether the change of network topology arises from a failure on a protection path of a ring switching for the service (603),
if the change of network topology arises from a failure on a protection path of a ring switching for the service, determining an interruption or a misconnection occurs in the service and triggering a re-routing for the service (604);
if the change of network topology doesn't arise from a failure on a protection path of a ring switching for the service, determining, no interruption or misconnection occurs in the service; and returning to the process of each node in the ASON getting the information of the network topology, saving the information of the network topology and updating the information of the network topology in real time.

9. The method according to Claim 8, wherein a failure on a protection path of a ring switching comprises a failure occurring in a node of the protection path of the ring switching, or a failure occurring in a work optical fibers and/or a protection optical fibers between nodes of the protection path of the ring switching.

10. The method according to Claim 8, wherein determining whether the network topology is changed, determining whether an interruption or a -misconnection occurs in the and triggering a re-routing for the service are performed by a source node of the service.

11. The method according to Claim 8, wherein determining whether the network topology is changed and determining whether an interruption or a -misconnection occurs in the service are performed by a destination node of the service,
when the destination node of the service determines an interruption or a misconnection occurs in the service, the method further comprises:
- the destination node of the service informing a source node of the service that an interruption or a misconnection occurs in the service; and
the source node of the service triggering the re-routing for the service.

12. The method according to Claim 8, wherein determining whether the network topology is changed and determining whether an interruption or a -misconnection occurs in the service are performed by an ingress node which is the first node the service entering the four-fiber MS share protection ring, further referred as ingress node;
when the ingress node determines an interruption or a misconnection occurs in the service, the method further comprises:
- the ingress node of the service informing a source node of current service that an interruption or a misconnection occurs in the service; and
the source node of the service triggering the re-routing for the service.

13. The method according to Claim 8, wherein determining whether the network topology is changed and determining whether an interruption or a misconnection occurs in the service are performed by an egress node which is the last node traversed by the service before the service leaving the four-fiber MS share protection ring, further referred as egress node;
when the egress node of the service determines an interruption or a misconnection occurs in the service, the method further comprises:
- the egress node of the service informing a source node of the service that an interruption or a misconnection occurs in the service; and
the source node of the service triggering the re-routing for the service.

14. The method according to Claim 8, wherein each node in the ASON getting information of a network topology is achieved by performing a flooding to Traffic Engineering, TE, links through a route protocol.

15. The method according to Claim 8, wherein the information of network topology comprises information of a multiplex section.

## Patentansprüche

1. Verfahren zum Triggern einer Dienstumleitung, welches aufweist:
das Erhalten von Information über eine Netztopologie, das Speichern der Information über die Netztopologie und das Aktualisieren der Netztopologie in Echtzeit durch jeden Knoten in einem automatischen optischen Vermittlungsnetzwerk, ferner als ASON bezeichnet (501);
das Bestimmen durch einen Knoten in dem ASON, ob die Netztopologie entsprechend der gespeicherten Information der Netztopologie verändert ist (502),
**dadurch gekennzeichnet, dass** das Verfahren ferner aufweist:
falls der Knoten in dem ASON bestimmt, dass eine Veränderung auftritt und die Veränderung in einem gemeinsam genutzten Schutzring eines Zwei-Faser-Multiplex-Abschnitts auftritt, welcher im Weiteren als gemeinsamer Zwei-Faser-MS-Schutzring bezeichnet wird, der Knoten in dem ASON ferner bestimmt, ob ein Eintrittsknoten, welcher der erste Knoten ist, in den ein Dienst in den gemeinsam genutzten Zwei-Faser-MS-Schutzring eintritt, ferner als Eintrittsknoten bezeichnet, und ein Austrittsknoten, welcher der letzte Knoten ist, welcher durch den Dienst durchlaufen wird, bevor der Dienst den gemeinsam genutzten Zwei-Faser-MS-Schutzring verlässt, im Weiteren als Austrittsknoten bezeichnet, in unterschiedlichen Verbindungsbauteilen platziert sind (503);
falls der Eintrittsknoten und der Austrittsknoten in unterschiedlichen Verbindungsbauteilen platziert sind, Bestimmen, dass eine Unterbrechung oder eine Fehlverbindung in dem Dienst auftritt und Triggern einer Umleitung für den Dienst (504);
falls der Eintrittsknoten und der Austrittsknoten in dem gleichen Verbindungsbauteil platziert sind, Bestimmen, dass keine Unterbrechung oder Fehlverbindung in dem Dienst auftritt, und Zurückkehren zu dem Prozess des jeweiligen Knotens in dem ASON, welcher die Information über die Netztopologie erhält, welcher die Information über die Netztopologie speichert und welcher die Information über die Netztopologie in Echtzeit aktualisiert.

2. Verfahren nach Anspruch 1, wobei das Bestimmen, ob die Netztopologie verändert ist, das Bestimmen, ob eine Unterbrechung oder eine Fehlverbindung in dem Dienst auftritt und das Triggern einer Umleitung für den Dienst durch einen Quellenknoten des Dienstes durchgeführt werden.

3. Verfahren nach Anspruch 1, wobei das Bestimmen, ob die Netztopologie verändert ist, und das Bestimmen, ob eine Unterbrechung oder eine Fehlverbindung in dem Dienst auftritt, durch einen Zielknoten des Dienstes durchgeführt werden;
wenn der Dienstknoten des Dienstes bestimmt, dass eine Unterbrechung oder eine Fehlverbindung in dem Dienst auftritt, das Verfahren ferner aufweist:
Informieren eines Quellenknotens des Dienstes durch den Zielknotens des Dienstes, dass eine Unterbrechung oder eine Fehlverbindung in dem Dienst auftritt; und
Triggern der Umleitung für den Dienst durch den Quellenknoten des Dienstes.

4. Verfahren nach Anspruch 1, wobei das Bestimmen, ob die Netztopologie verändert ist, und das Bestimmen, ob eine Unterbrechung oder eine Fehlverbindung in dem Dienst auftritt, durch den Eintrittsknoten des Dienstes ausgeführt wird;
wenn der Eintrittsknoten des Dienstes bestimmt, dass eine Unterbrechung oder eine Fehlverbindung in dem Dienst auftritt, weist das Verfahren ferner auf:
Informieren eines Quellenknotens des Dienstes durch den Eintrittsknotens des Dienstes, dass eine Unterbrechung oder eine Fehlverbindung in dem Dienst auftritt; und
Triggern des Umleitens für den Dienst durch den Quellenknotens des Dienstes.

5. Verfahren nach Anspruch 1, wobei das Bestimmen, ob die Netztopologie verändert ist, und das Bestimmen, ob eine Unterbrechung oder eine Fehlverbindung in dem Dienst auftritt, durch den Austrittsknoten des Dienstes durchgeführt wird;
wenn der Austrittsknoten des Dienstes bestimmt, dass eine Unterbrechung oder eine Fehlverbindung in dem Dienst auftritt, weist das Verfahren ferner auf:
Informieren eines Quellenknotens des Dienstes durch den Austrittsknotens des Dienstes, dass eine Unterbrechung oder eine Fehlverbindung in dem Dienst auftritt; und
Triggern des Umleitens für den Dienst durch den Quellenknoten des Dienstes.

6. Verfahren nach Anspruch 1, wobei das Erhalten der Information einer Netztopologie durch jeden Knoten in dem ASON durch das Durchführen eines Flutens zu Verkehrstechnik-, im Weiteren als TE- bezeichnet, Verbindungsgliedern durch ein Routing-Protokoll erreicht wird.

7. Verfahren nach Anspruch 1, wobei die Information der Netztopologie Information für einen Multiplex-Abschnitt aufweist.

8. Verfahren zum Triggern einer Dienstumleitung, welches aufweist:
das Erhalten von Information über eine Netztopologie, das Speichern der Information über die Netztopologie und das Aktualisieren der Information über die Netztopologie in Echtzeit durch jeden Knoten in einem automatischen optischen Vermittlungsnetz, welches ferner als ASON bezeichnet wird, (601);
Bestimmen eines Knotens in dem ASON, ob die Netztopologie entsprechend der gespeicherten Information der Netztopologie verändert ist (602);
**dadurch gekennzeichnet, dass** das Verfahren ferner aufweist:
falls der Knoten in dem ASON bestimmt, dass eine Veränderung auftritt und die Veränderung in einem gemeinsam genutzten Vier-Faser-Multiplex-Abschnitt-Schutzring (gemeinsam genutzter Vier-Faser-MS-Schutzring) auftritt,
der Knoten in dem ASON ferner bestimmt, ob die Veränderung der Netztopologie von einem Fehler auf einem Schutzpfad einer Ringvermittlung für den Dienst auftritt (603), falls die Netztopologie von einem Fehler auf einem Schutzpfad einer Ringvermittlung für den Dienst herrührt, Bestimmen, dass eine Unterbrechung oder eine Fehlverbindung in dem Dienst auftritt, und Triggern einer Umleitung für den Dienst (604);
falls die Veränderung der Netztopologie nicht von einem Fehler in einem Schutzpfad einer Ringvermittlung für den Dienst herrührt, Bestimmen, dass keine Unterbrechung oder Fehlverbindung in dem Dienst auftritt, und Zurückkehren zu dem Vorgang des jeweiligen Knotens in dem ASON, welcher die Information über die Netztopologie erhält, welcher die Information über die Netztopologie speichert und welcher die Information über die Netztopologie in Echtzeit aktualisiert.

9. Verfahren nach Anspruch 8, wobei ein Fehler in einem Schutzpfad einer Ringvermittlung einen Fehler, welcher in einem Knoten des Schutzpfades der Ringvermittlung auftritt, oder einen Fehler, welcher in einer optischen Arbeitsfaser und/oder einer optischen Schutzfaser zwischen Knoten des Schutzpfades der Ringvermittlung auftritt, aufweist.

10. Verfahren nach Anspruch 8, wobei das Bestimmen, ob die Netztopologie verändert ist, das Bestimmen, ob eine Unterbrechung oder eine Fehlverbindung in dem Dienst auftritt, und das Triggern eines Umleitens für den Dienst durch einen Quellenknoten des Dienstes durchgeführt werden.

11. Verfahren nach Anspruch 8, wobei das Bestimmen, ob die Netztopologie verändert ist, und das Bestimmen, ob eine Unterbrechung oder eine Fehlverbindung in dem Dienst auftritt, durch einen Zielknoten des Dienstes durchgeführt wird,
wenn der Zielknoten des Dienstes bestimmt, dass eine Unterbrechung oder eine Fehlverbindung in dem Dienst auftritt, das Verfahren ferner aufweist:
Informieren eines Quellenknotens des Dienstes durch den Zielknoten des Dienstes, dass eine Unterbrechung oder eine Fehlverbindung in dem Dienst auftritt; und
Triggern der Umleitung für den Dienst durch den Quellenknoten des Dienstes.

12. Verfahren nach Anspruch 8, wobei das Bestimmen, ob die Netztopologie verändert ist, und das Bestimmen, ob eine Unterbrechung oder eine Fehlverbindung in dem Dienst auftritt, durch einen Eintrittsknoten durchgeführt werden, welcher der erste Knoten des Dienstes ist, welcher in einen gemeinsam genutzten Vier-Faser-MS-Schutzring eintritt, ferner als Eintrittsknoten bezeichnet;
wenn der Eintrittsknoten bestimmt, dass eine Unterbrechung oder eine Fehlverbindung in dem Dienst auftritt, das Verfahren ferner aufweist:
Informieren eines Quellenknotens des aktuellen Dienstes durch den Eintrittsknoten des Dienstes, dass eine Unterbrechung oder eine Fehlverbindung in dem Dienst auftritt; und
Triggern des Umleitens für den Dienst durch den Quellenknoten des Dienstes.

13. Verfahren nach Anspruch 8, wobei das Bestimmen, ob die Netztopologie verändert ist, und das Bestimmen, ob eine Unterbrechung oder eine Fehlverbindung in dem Dienst auftritt, durch einen Austrittsknoten durchgeführt werden, welcher der letzte Knoten ist, welcher von dem Dienst durchlaufen wird, bevor der Dienst den gemeinsam genutzten Vier-Faser-MS-Schutzring verlässt, im Weiteren als Austrittsknoten bezeichnet;
wenn der Austrittsknoten des Dienstes bestimmt, dass eine Unterbrechung oder eine Fehlverbindung in dem Dienst auftritt, das Verfahren ferner aufweist:
Informieren eines Quellenknotens des Dienstes durch den Austrittsknoten des Dienstes, dass eine Unterbrechung oder eine Fehlverbindung in dem Dienst auftritt; und
Triggern des Umleitens für den Dienst durch den Quellenknoten des Dienstes.

14. Verfahren nach Anspruch 8, wobei das Erhalten der Information einer Netztopologie jedes Knotens in dem ASON durch das Durchführen eines Flutens zu Verkehrstechnik-, TE- Verbindungsgliedern durch ein Routing-Protokoll erreicht wird.

15. Verfahren nach Anspruch 8, wobei die Information der Netztopologie Information eines Multiplex-Abschnittes aufweist.

## Revendications

1. Procédé pour déclencher un réacheminement de service, comprenant :
chaque noeud dans un Réseau Optique Automatiquement Commuté, mentionné en outre par ASON, obtenant des informations d'une topologie de réseau, sauvegardant les informations de la topologie de réseau et mettant à jour les informations de la topologie de réseau en temps réel (501) ;
un noeud dans l'ASON déterminant si la topologie de réseau est modifiée selon les informations sauvegardées de topologie de réseau (502),
**caractérisé en ce que** le procédé comprend en outre :
si le noeud dans l'ASON détermine qu'un changement se produit et que le changement se produit dans un anneau de protection de partage de Section Multiplex à deux fibres, mentionné en outre par anneau de protection de partage MS à deux fibres, la détermination en outre par le noeud dans l'ASON si un noeud d'entrée qui est le premier noeud par lequel un service entre dans l'anneau de protection partagé MS à deux fibres, mentionné en outre par noeud d'entrée, et un noeud de sortie qui est le dernier noeud traversé par le service avant que le service ne quitte l'anneau de protection partagé MS à deux fibres, mentionné en outre par noeud de sortie, sont situés dans des composants de connexion différents (503) ;
si le noeud d'entrée et le noeud de sortie sont situés dans des composants de connexion différents, la détermination qu'une interruption ou une défaillance de connexion se produisent dans le service et le déclenchement d'un réacheminement pour le service (504) ;
si le noeud d'entrée et le noeud de sortie sont situés dans le même composant de connexion, la détermination qu'aucune interruption ou défaillance de connexion ne se produisent dans le service et le retour au processus de chaque noeud dans l'ASON obtenant les informations de la topologie de réseau, sauvegardant les informations de la topologie de réseau et mettant à jour les informations de la topologie de réseau en temps réel.

2. Procédé selon la revendication 1, dans lequel la détermination si la topologie de réseau est modifiée, la détermination si une interruption ou une défaillance de connexion se produisent dans le service et le déclenchement d'un réacheminement pour le service sont effectués par un noeud de source du service.

3. Procédé selon la revendication 1, dans lequel la détermination si la topologie de réseau est modifiée et la détermination si une interruption ou une défaillance de connexion se produisent dans le service sont effectuées par un noeud de destination du service ;
lorsque le noeud de destination du service détermine qu'une interruption ou une défaillance de connexion se produisent dans le service, le procédé comprend en outre :
le noeud de destination du service informant un noeud de source du service qu'une interruption ou une défaillance de connexion se produisent dans le service ; et
le noeud de source du service déclenchant le réacheminement pour le service.

4. Procédé selon la revendication 1, dans lequel la détermination si la topologie de réseau est modifiée et la détermination si une interruption ou une défaillance de connexion se produisent dans le service sont effectuées par le noeud d'entrée du service ;
lorsque le noeud d'entrée du service détermine qu'une interruption ou une défaillance de connexion se produisent dans le service, le procédé comprend en outre :
le noeud d'entrée du service informant un noeud de source du service qu'une interruption ou une défaillance de connexion se produisent dans le service ; et
le noeud de source du service déclenchant le réacheminement pour le service.

5. Procédé selon la revendication 1, dans lequel la détermination si la topologie de réseau est modifiée et la détermination si une interruption ou une défaillance de connexion se produisent dans le service sont effectuées par le noeud de sortie du service ;
lorsque le noeud de sortie du service détermine qu'une interruption ou une défaillance de connexion se produisent dans le service, le procédé comprend en outre :
le noeud de sortie du service informant un noeud de source du service qu'une interruption ou une défaillance de connexion se produisent dans le service ; et
le noeud de source du service déclenchant le réacheminement pour le service.

6. Procédé selon la revendication 1, dans lequel le fait que chaque noeud dans l'ASON obtienne des informations d'une topologie de réseau est réalisé en effectuant une inondation vers des liaisons d'Ingénierie de Trafic, mentionnée en outre par TE, par l'intermédiaire d'un protocole d'acheminement.

7. Procédé selon la revendication 1, dans lequel les informations de la topologie de réseau comprennent des informations d'une section multiplex.

8. Procédé pour déclencher un réacheminement de service, comprenant :
chaque noeud dans un Réseau Optique Automatiquement Commuté, mentionné en outre par ASON, obtenant des informations d'une topologie de réseau, sauvegardant les informations de la topologie de réseau et mettant à jour les informations de la topologie de réseau en temps réel (601) ;
un noeud dans l'ASON déterminant si la topologie de réseau est modifiée selon les informations sauvegardées de topologie de réseau (602) ;
**caractérisé en ce que** le procédé comprend en outre :
si le noeud dans l'ASON détermine qu'un changement se produit et que le changement se produit dans un anneau de protection partagé de Section Multiplex à quatre fibres (anneau de protection de partage MS à quatre fibres) ;
les noeuds dans l'ASON déterminant en outre si le changement de topologie de réseau résulte d'une défaillance sur un chemin de protection d'une commutation d'anneau pour le service (603) ;
si le changement de topologie de réseau résulte d'une défaillance sur un chemin de protection d'une commutation d'anneau pour le service, la détermination qu'une interruption ou une défaillance de connexion se produisent dans le service et le déclenchement d'un réacheminement pour le service (604) ;
si le changement de topologie de réseau ne résulte pas d'une défaillance sur un chemin de protection d'une commutation d'anneau pour le service, la détermination qu'aucune interruption ou défaillance de connexion ne se produisent dans le service et le retour au processus de chaque noeud dans l'ASON obtenant les informations de la topologie de réseau, sauvegardant les informations de la topologie de réseau et mettant à jour les informations de la topologie de réseau en temps réel.

9. Procédé selon la revendication 8, dans lequel une défaillance sur un chemin de protection d'une commutation d'anneau comprend une défaillance se produisant dans un noeud du chemin de protection de la commutation d'anneau, ou une défaillance se produisant dans une fibre optique de travail et/ou une fibre optique de protection entre des noeuds du chemin de protection de la commutation d'anneau.

10. Procédé selon la revendication 8, dans lequel la détermination si la topologie de réseau est modifiée, la détermination si une interruption ou une défaillance de connexion se produisent dans le service et le déclenchement d'un réacheminement pour le service sont effectués par un noeud de source du service.

11. Procédé selon la revendication 8, dans lequel la détermination si la topologie de réseau est modifiée et la détermination si une interruption ou une défaillance de connexion se produisent dans le service sont effectuées par un noeud de destination du service,
lorsque le noeud de destination du service détermine qu'une interruption ou une défaillance de connexion se produisent dans le service, le procédé comprend en outre :
le noeud de destination du service informant un noeud de source du service qu'une interruption ou une défaillance de connexion se produisent dans le service ; et
le noeud de source du service déclenchant le réacheminement pour le service.

12. Procédé selon la revendication 8, dans lequel la détermination si la topologie de réseau est modifiée et la détermination si une interruption ou une défaillance de connexion se produisent dans le service sont effectuées par un noeud d'entrée qui est le premier noeud par lequel le service pénètre dans l'anneau de protection de partage MS à quatre fibres, en outre mentionné par noeud d'entrée ;
lorsque le noeud d'entrée détermine qu'une interruption ou une défaillance de connexion se produisent dans le service, le procédé comprend en outre :
le noeud d'entrée du service informant un noeud de source de service courant qu'une interruption ou une défaillance de connexion se produisent dans le service ; et
le noeud de source du service déclenchant le réacheminement pour le service.

13. Procédé selon la revendication 8, dans lequel la détermination si la topologie de réseau est modifiée et la détermination si une interruption ou une défaillance de connexion se produisent dans le service sont effectuées par un noeud de sortie qui est le dernier noeud traversé par le service avant que le service ne quitte l'anneau de protection de partage MS à quatre fibres, en outre mentionné par noeud de sortie ;
lorsque le noeud de sortie du service détermine qu'une interruption ou une défaillance de connexion se produisent dans le service, le procédé comprend en outre :
le noeud de sortie du service informant un noeud source du service qu'une interruption ou une défaillance de connexion se produisent dans le service ; et
le noeud de source du service déclenchant le réacheminement pour le service.

14. Procédé selon la revendication 8, dans lequel le fait que chaque noeud dans l'ASON obtienne des informations d'une topologie de réseau est réalisé en effectuant une inondation vers des liaisons d'Ingénierie de Trafic, mentionnée en outre par TE, par l'intermédiaire d'un protocole d'acheminement.

15. Procédé selon la revendication 8, dans lequel les informations de topologie de réseau comprennent des informations d'une section multiplex.
